# EUROPÄISCHE PATENTANMELDUNG

(11) **EP 3 076 254 A1**
(43) Veröffentlichungstag der Anmeldung: **05.10.2016**
(21) Anmeldenummer: 15161919.4
(22) Anmeldetag: 31.03.2015
(51) Int. Cl.: G05B 19/418, G05B 19/04

(54) **VERFAHREN ZUM BETRIEB EINES LEITSYSTEMS FÜR EINEN TECHNISCHEN PROZESS SOWIE LEITSYSTEM**

(71) Anmelder: Siemens Aktiengesellschaft, 80333 München (DE)
(72) Erfinder: Lutz, Benjamin, 76327 Pfinztal (DE)

(57) **Zusammenfassung**

Bei einem Verfahren zum Betrieb eines Leitsystems (1) für einen technischen Prozess (2), wobei das Leitsystem (1) ein Bedien- und Beobachtungssystem (3) und zumindest ein Automatisierungssystem (10, 20) umfasst und wobei Prozesswerte von dem zumindest einen Automatisierungssystem (10, 20) an das Bedien- und Beobachtungssystem (3) übertragen werden, erfolgt erfindungsgemäß die Übertragung der Prozesswerte wahlweise mit einem von zumindest zwei vorbestimmten Verfahren zur Bestimmung der Übertragungszeitpunkte von Prozesswerten vorgebbarer Prozessvariablen.

Durch Auswahl des zu einem bestimmten Zeitpunkt geeignetsten Verfahrens zur Bestimmung der Übertragungszeitpunkte kann das Leitsystem dann optimal auf den Prozess bzw. einer Einrichtung, auf der der Prozess abläuft, eingestellt werden. Es ist eine lastengesteuerte und dynamische Umschaltung zwischen den Verfahren zur Bestimmung der Übertragungszeitpunkte möglich.

## Beschreibung

Die Erfindung betrifft ein Verfahren zum Betrieb eines Leitsystems für einen technischen Prozess, wobei das Leitsystem ein Bedien- und Beobachtungssystem und zumindest ein Automatisierungssystem umfasst und wobei Prozesswerte von dem zumindest einen Automatisierungssystem an das Bedien- und Beobachtungssystem übertragen werden. Die Erfindung betrifft ferner ein Leitsystem für einen technischen Prozess.

Ein bekanntes Beispiel für ein Leitsystem für einen technischen Prozess ist das Prozessleitsystem vom Typ SIMATIC PCS 7 der Anmelderin. Bei dem zumindest einen Automatisierungssystem handelt es sich dann beispielsweise um ein Automatisierungssystem vom Typ S7-400 der Anmelderin. Das eine Automatisierungssystem oder die mehreren Automatisierungssysteme hat bzw. haben dabei die Funktion eines Controllers für die jeweils daran angeschlossene Prozessperipheriegeräte und ist bzw. sind üblicherweise über einen Kommunikationsbus, z.B. einen Industrial Ethernet-Bus, kommunikativ mit einem Bedien- und Beobachtungssystem verbunden. Dieser Kommunikationsbus wird manchmal auch als "Anlagenbus" bezeichnet.

Das Bedien- und Beobachtungssystem ermöglicht eine Führung des Prozesses durch Bedienpersonal. Das Bedienpersonal kann den Prozessablauf über verschiedene Sichten beobachten und bei Bedarf steuernd eingreifen. Das Bedien- und Beobachtungssystem kann hierzu ein oder mehrere Bedien- und Beobachtungsplätze (häufig auch als "Operator Station" bezeichnet) umfassen, die als Clients ausgebildet sind und über einen Terminalbus kommunikativ mit einem Server verbunden sind, der wiederum an den Anlagenbus angeschlossen ist und ebenfalls als Bestandteil des Bedien- und Beobachtungssystems angesehen werden kann.

Der technische Prozess kann beispielsweise ein Prozess zur Herstellung von Chemikalien, Nahrungs- und Genussmitteln, Pharmazieprodukten oder Produkten der Petrochemie sein, der in einer entsprechenden Einrichtung (z.B. Anlage) abläuft. Es kann sich aber beispielsweise auch um einen Prozess zur Wasserbehandlung oder einen Kraftwerksprozess handeln.

Heutige Leitsysteme verwenden feste Kommunikationsparadigmen für die Übertragung von Prozesswerten (z.B. Drücke, Gewichte, Temperaturen, Füllstandshöhen) von einem Automatisierungssystem zum Bedien- und Beobachtungsystem. So werden bei SIMATIC PCS 7 Prozesswerte in Form von Prozessdaten ausschließlich zyklisch übertragen bzw. abgefragt ("Polling"-Verfahren).

Bei Leitsystemen für Kraftwerke werden hingegen ereignisorientierte Übertragungsverfahren angewandt, die häufig auch als "EDC" (Event Driven Communication) bezeichnet werden. Beim EDC werden Prozesswerte von dem Automatisierungssystem an das Bedien- und Beobachtungssystem erst dann übertragen, wenn sie sich seit der letzten Übertragung geändert haben.

Ausgehend hiervon ist es Aufgabe vorliegender Erfindung, ein Verfahren zum Betrieb eines Leitsystems sowie ein Leitsystem anzugeben, mit dem der Betrieb des Leitsystems noch weiter verbessert werden kann.

Die Lösung dieser Aufgabe gelingt durch ein Verfahren zum Betrieb eines Leitsystems für einen technischen Prozess gemäß Patentanspruch 1 sowie durch ein Leitsystem gemäß Patentanspruch 11. Ein Automatisierungssystem zur Verwendung in einem derartigen Leitsystem ist Gegenstand des Anspruchs 15 und ein Bedien- und Beobachtungssystem zur Verwendung in einem derartigen Leitsystem ist Gegenstand des Anspruchs 16. Vorteilhafte Ausgestaltungen sind jeweils Gegenstand der Unteransprüche.

Bei dem erfindungsgemäßen Verfahren zum Betrieb eines Leitsystems für einen technischen Prozess, wobei das Leitsystem ein Bedien- und Beobachtungssystem und zumindest ein Automatisierungssystem umfasst und wobei Prozesswerte von dem zumindest einen Automatisierungssystem an das Bedien- und Beobachtungssystem übertragen werden, erfolgt die Übertragung der Prozesswerte wahlweise mit einem von zumindest zwei vorbestimmten Verfahren zur Bestimmung der Übertragungszeitpunkte von Prozesswerten vorgebbarer Prozessvariablen.

Erfindungsgemäß stehen während des Betriebes des Prozesses bzw. der Einrichtung, in der der Prozess abläuft, somit zumindest zwei unterschiedliche Verfahren zur Bestimmung der Übertragungszeitpunkte für die Übertragung der Prozesswerte zur Verfügung. Durch Auswahl des zu einem bestimmten Zeitpunkt geeignetsten Verfahrens kann das Leitsystem dann optimal auf den Prozess bzw. eine Einrichtung, auf der der Prozess abläuft, eingestellt werden.

Die Erfindung geht hierbei von der Erkenntnis aus, dass Übertragungsverfahren mit unterschiedlichen Übertragungszeitpunkten ein Leitsystem im Betrieb auch unterschiedlich belasten, z.B. in Bezug auf benötigte Rechenleistung und Kommunikationsbedarf, und somit jeweils ihre Vor- und Nachteile haben. Durch Auswahl des jeweils geeignetsten Übertragungsverfahrens kann die Belastung des Leitsystems, z.B. in Bezug auf benötigte Rechenleistung und Kommunikationsbedarf, reduziert und somit der Betrieb des Leitsystems optimiert werden. Eine besonders hohe Flexibilität und Anpassungsfähigkeit für eine derartige Optimierung kann dann erreicht werden, wenn die Auswahl des Verfahrens zur Bestimmung der Übertragungszeitpunkte für unterschiedliche Prozessvariablen auch unterschiedlich erfolgt, d.h. zu einem bestimmten Zeitpunkt nutzen unterschiedliche Prozessvariablen auch unterschiedliche Verfahren zur Bestimmung der Übertragungszeitpunkte. Die Auswahl des Übertragungsverfahren bzw. ein Umschalten zwischen den Übertragungsverfahren kann manuell durch Bedienpersonal oder automatisiert anhand vorgegebener Kriterien erfolgen. Insgesamt ist hierdurch ist eine lastengesteuerte und dynamische Übertragungsumschaltung möglich.

Gemäß einer ersten vorteilhaften Ausgestaltung erfolgt die Wahl des vorbestimmten Verfahrens zur Bestimmung der Übertragungszeitpunkte in Abhängigkeit von einem Betriebszustand des Prozesses. Der Betriebszustand kann beispielsweise von einem Bedienpersonal des Prozesses abgefragt werden. Alternativ kann der Betriebszustand durch das Leitsystem selbst, z.B. durch einen entsprechenden Funktionsbaustein in dem Bedien- und Beobachtungssystem, anhand eines vorgegebenen zeitlichen Ablaufes, z.B. "Anfahren" des Prozesses und Übergang zum "Normalbetrieb", oder anhand von ausgewählten Variablen des Prozesses, z.B. Drücke, Temperaturen, Gewichte, etc. ermittelt werden. Es kann dann je nach Zustand des Prozesses flexibel von den Vorteilen des jeweiligen Verfahrens Gebrauch gemacht werden und es können somit die Vorteile mehrerer Übertragungsverfahren genutzt werden.

Gemäß einer weiteren vorteilhaften Ausgestaltung erfolgt die Wahl des vorbestimmten Verfahrens zur Bestimmung der Übertragungszeitpunkte in Abhängigkeit von einer Aktualisierungsrate eines in dem Bedien- und Beobachtungssystem gespeicherten Prozessabbildes. Die Aktualisierungsrate ist ein Indiz für den Kommunikationsbedarf (und somit indirekt auch für den Betriebszustand des Prozesses) zwischen dem Automatisierungssystem und dem Bedien- und Beobachtungssystem und kann deshalb als Kriterium für die Wahl des Übertragungsverfahrens genutzt werden.

Gemäß einer besonders einfachen Ausgestaltung wird dabei zwischen den vorbestimmten Verfahren zur Bestimmung der Übertragungszeitpunkte umgeschaltet, wenn die Aktualisierungsrate einen Schwellwert unter- oder überschreitet.

Bevorzugt werden bei einem ersten der zumindest zwei vorbestimmten Verfahren zur Bestimmung der Übertragungszeitpunkte die Prozesswerte ereignisgesteuert übertragen. Falls sich Prozesswerte kaum ändern, ist im Fall einer ereignisgesteuerten Übertragung die Kommunikationslast zwischen dem zumindest einen Automatisierungssystem und dem Bedien- und Beobachtungssystem relativ niedrig. Dieses Übertragungsverfahren wird vorzugsweise bei einem Normalbetrieb des Prozesses verwendet, da sich dabei die Prozesswerte kaum ändern. Gemäß einer besonders einfachen Ausgestaltung werden dabei die Prozesswerte in dem Automatisierungssystem auf Änderungen überwacht, nur geänderte Prozesswerte an das Bedien- und Beobachtungssystem übertragen und in dem Bedien- und Beobachtungssystem die empfangenen geänderten Prozesswerte zur Aktualisierung eines Prozessabbildes verwendet.

Von Vorteil werden bei einem zweiten der zumindest zwei vorbestimmten Verfahren zur Bestimmung der Übertragungszeitpunkte die Prozesswerte zyklisch übertragen (z.B. durch zyklisches "Polling"). Dieses Übertragungsverfahren eignet sich vor allem, wenn sich Prozesswerte relativ häufig ändern. Vorzugsweise wird dieses Übertragungsverfahren bei einem Hochfahren des Prozesses durch das Leitsystem und/oder einer Störung des Prozesses verwendet, da sich dabei die Prozesswerte üblicherweise relativ häufig ändern. Gemäß einer besonders einfachen Ausgestaltung werden dabei die von dem Bedien- und Beobachtungssystem empfangenen Prozesswerte auf Änderungen überwacht und nur geänderte Prozesswerte zur Aktualisierung eines Prozessabbildes verwendet.

Ein erfindungsgemäßes Leitsystem für einen technischen Prozess umfasst ein Bedien- und Beobachtungssystem und zumindest ein Automatisierungssystem, wobei Prozesswerte von dem zumindest einen Automatisierungssystem an das Bedien- und Beobachtungssystem übertragbar sind, und wobei das Leitsystem derart ausgebildet ist, dass die Übertragung der Prozesswerte wahlweise mit einem von zumindest zwei vorbestimmten Verfahren zur Bestimmung der Übertragungszeitpunkte von Prozesswerten vorgebbarer Prozessvariablen erfolgt.

Vorzugsweise weist das Leitsystem eine Einrichtung auf, die dazu ausgebildet ist, einen Betriebszustand des Prozesses zu ermitteln und das vorbestimmte Verfahren zur Bestimmung der Übertragungszeitpunkte in Abhängigkeit von dem ermittelten Betriebszustand des Prozesses auszuwählen.

Von Vorteil ist es, wenn in dem Bedien- und Beobachtungssystem ein Prozessabbild des Prozesses gespeichert wird und es eine Funktionskomponente aufweist, die dazu ausgebildet ist, eine Aktualisierungsrate des Prozessabbildes zu ermitteln und das vorbestimmte Verfahren zur Bestimmung der Übertragungszeitpunkte in Abhängigkeit von der ermittelten Aktualisierungsrate auszuwählen.

Bevorzugt ist in der Funktionskomponente ein Schwellwert gespeichert und sie ist dazu ausgebildet, zwischen den vorbestimmten Verfahren zur Bestimmung der Übertragungszeitpunkte umzuschalten, wenn die Aktualisierungsrate den Schwellwert unter- oder überschreitet.

Gemäß einer weiteren vorteilhaften Ausgestaltung erfolgt bei einem ersten der zumindest zwei vorbestimmten Verfahren zur Bestimmung der Übertragungszeitpunkte die Übertragung der Prozesswerte zyklisch.

Gemäß einer weiteren vorteilhaften Ausgestaltung erfolgt bei einem zweiten der zumindest zwei vorbestimmten Verfahren zur Bestimmung der Übertragungszeitpunkte die Übertragung der Prozesswerte ereignisgesteuert.

Die für das erfindungsgemäße Verfahren und seine vorteilhaften Ausgestaltungen genannten Vorteile gelten entsprechend für das erfindungsgemäße Leitsystem und dessen jeweils korrespondierenden vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1: einen prinzipiellem Aufbau eines Prozessleitsystems,
- FIG 2: eine Architektur eines erfindungsgemäßen Prozessleitsystems,
- FIG 3: die Architektur des Prozessleitsystems von FIG 2 im Zustand des Hochfahrens des Prozesses und
- FIG 4: die Architektur des Prozessleitsystems von FIG 2 im Zustand des Normalbetriebs des Prozesses.

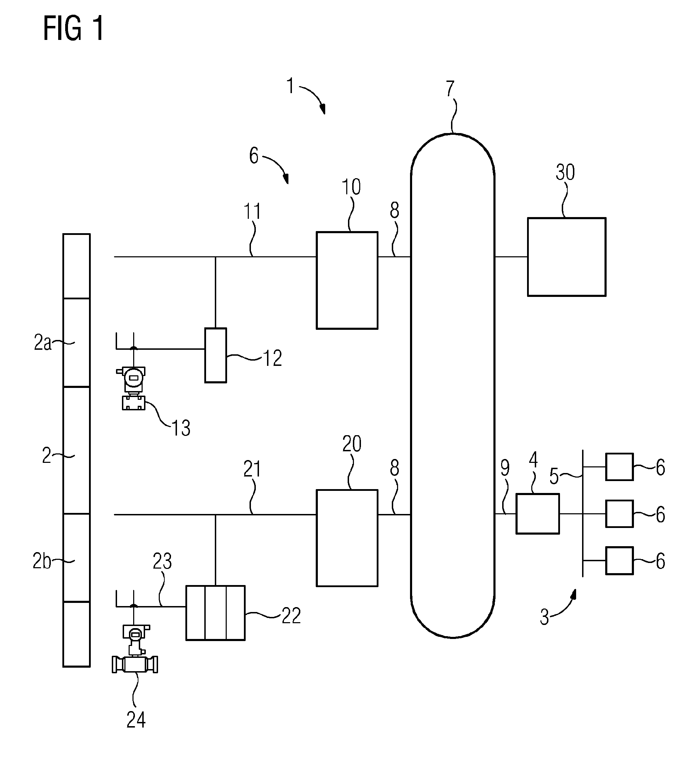

Gemäß FIG 1 umfasst ein Leitsystem 1 für einen Prozess 2 ein Bedien- und Beobachtungssystem 3 und ein oder mehrere, hier zwei, Automatisierungssysteme 10, 20. Die Automatisierungssysteme 10, 20 können dabei beispielsweise modular aus verschiedenen Baugruppen aufgebaut sein, die in geeigneter Weise zu einem Gerät zusammengefasst sind.

Die Automatisierungssysteme 10, 20 sind über jeweils einen Anschluss 8 und einen Anlagen-Kommunikationsbus 7, z.B. einen Industrial Ethernet Bus, miteinander und mit dem Bedien- und Beobachtungssystem 3 kommunikativ verbunden. An die Automatisierungssysteme 10, 20 sind über weitere geeignete Busverbindungen Ein-/Ausgabe-Peripheriegeräte angeschlossen, an die wiederum Aktoren und/oder Sensoren angeschlossen sind. Im Ausführungsbeispiel ist an das Automatisierungssystem 10 über eine Busverbindung 11, z.B. einen PROFIBUS DP, ein Peripheriegerät 12 angeschlossen, an das wiederum ein Aktor 13 angeschlossen ist. An das Automatisierungssystem 20 ist über eine Busverbindung 21, z.B. einen PROFIBUS DP, ein Peripheriegerät 22 angeschlossen, an das wiederum über eine weitere Busverbindung 23, z.B. einen PROFIBUS PA, ein Sensor 24 angeschlossen ist. Es können natürlich noch weitere Aktoren und Sensoren über die dargestellten Busverbindungen oder über weitere geeignete Busverbindungen mit den Automatisierungssystemen 10, 20 verbunden sein. Mittels der Peripheriegeräte 12, 22 und damit verbundener Sensoren werden von den Automatisierungssystemen 10, 20 Prozesswerte von Prozessvariablen erfasst und in den Automatisierungssystemen 10, 20 abgespeichert.

Weiterhin können an das Leitsystem 1 noch weitere Systeme oder Komponenten angeschlossen sein wie z.B. ein Engineering-System 30. Auch können je nach Komplexität des zu steuernden technischen Prozesses bzw. der zu steuernden Einrichtung weitere Automatisierungssysteme sowie weitere Peripherien vorhanden sein.

Das Bedien- und Beobachtungssystem 3 umfasst einen Server 4 und mehrere über einen Terminalbus 5 damit verbundene Bedien- und Beobachtungsplätze 6 (häufig auch als "Operator Station" bezeichnet), die als Clients ausgebildet sind. Der Server 4 ist über einen Anschluss 9 an den Anlagen-Kommunikationsbus 7 angeschlossen und hierüber mit den Automatisierungssystemen 10, 20 kommunikativ verbunden.

Der Prozess 2 umfasst mehrere Prozessobjekte mit Prozessvariablen, von denen beispielhaft die Prozessobjekte 2a und 2b dargestellt sind.

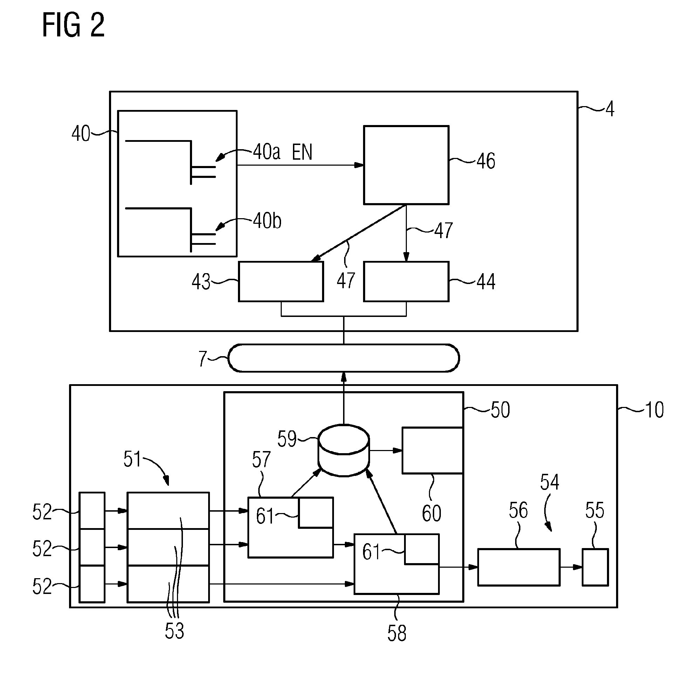

FIG 2 zeigt eine Architektur eines erfindungsgemäßen Prozessleitsystems. Zur Vereinfachung ist dabei von den Automatisierungssystemen nur noch das Automatisierungssystem 10 und von dem Bedien- und Beobachtungssystem 3 nur noch der Server 4 dargestellt.

In dem Server 4 ist in einem Speicher 40 ein Prozessabbild in Form von Prozessdaten, hier Prozessdaten 40a, 40b gespeichert. Die Prozessdaten 40a beziehen sich dabei auf das Prozessobjekt 2a bzw. den später erläuterten Funktionsbaustein 57 und die Prozessdaten 40b beziehen sich auf das Prozessobjekt 2b bzw. den später erläuterten Funktionsbaustein 58. Zur Kommunikation mit dem Automatisierungssystem 10 sind in der Runtime-Software des Servers 4 zwei Kommunikationstreiber 43, 44 vorhanden. Im Fall mehrerer Automatisierungssysteme können die Treiber 43, 44 auch mit jeweils mehreren Automatisierungssystemen verbunden sein.

Der Treiber 43 basiert auf einem Übertragungsverfahren mit zyklischen Übertragungszeitpunkten in Form eines "Polling", d.h. durch den Treiber 43 werden aus dem Automatisierungssystem 10 zyklisch Prozesswerte geladen. Das Schreiben der aktuellen Prozesswerte in das in dem Server 4 gespeicherte Prozessabbild durch den Treiber 43 ist dabei aber ereignisorientiert. Der Treiber 43 untersucht hierzu die empfangenen Prozesswerte auf eine Änderung, bevor er diese in das Prozessabbild 40 schreibt.

Der zweite Treiber 44 basiert auf einem Übertragungsverfahren mit ereignisgesteuerten Übertragungszeitpunkte zur Übertragung von Prozesswerten von dem Automatisierungssystem 10 in den Server 4.

Beide Treiber 43, 44 sind in der Lage, das in dem Server 4 gespeicherte Prozessabbild zu aktualisieren. Die Untersuchung eines Prozesswertes auf eine Änderung erfolgt bei dem zweiten Treiber 44 allerdings bereits in dem Automatisierungssystem 10. Der Treiber 44 leitet den Prozesswert nach dem Erhalt direkt in das in dem Server 4 gespeicherten Prozessabbild weiter. Aus Konsistenzgründen und zur Vermeidung von Zugriffskonflikten darf jedoch für jedes der Prozess-Objekte 2a, 2b exklusiv auch jeweils nur ein einziger der Treiber 43, 44 und somit nur ein einziges Übertragungsverfahren zwischen dem Automatisierungssystem 10 und dem Server 4 aktiv sein.

Zur Umschaltung zwischen den Übertragungsverfahren und somit den Treibern 43, 44 ist in der Runtime-Software des Servers 4 eine Funktionskomponente in Form eines dynamischen Rekonfigurationsbausteins 46 vorhanden. Jede Aktualisierung des Prozessabbildes wird durch eine Ereignis-Nachricht EN an diesen Baustein 46 gemeldet, und zwar separat für jedes der Prozessobjekte 2a, 2b bzw. deren Prozessdaten 40a, 40b. Der Rekonfigurationsbaustein 46 ermittelt auf Basis dieser Ereignis-Nachrichten EN, deren Inhalte (Zeitstempel) und einer von ihm daraus abgeleiteten Aktualisierungsrate des Prozessabbildes, d.h. der Anzahl von Aktualisierungen pro Zeiteinheit (z.B. pro Minute), welches der beiden vorbestimmten Verfahren zur Bestimmung der Übertragungszeitpunkte und somit welcher der Treiber 43, 44 für das jeweilige Prozessobjekt vorteilhaft und somit (zukünftig) zuständig ist, und führt ggf. auch eine Treiberumschaltung für das jeweilige Prozessobjekt durch. Dieser steuernde Eingriff in die Treiber 43, 44 ist durch die Pfeile 47 symbolisiert. Eine Umschaltung von einem auf ein anderes Übertragungsverfahren und somit Treiber 43, 44 kann beispielsweise dann erfolgen, wenn ein in dem Rekonfigurationsbaustein 46 abgespeicherter Schwellwert für die Aktualisierungsrate des Prozessabbildes unter- oder überschritten wird.

Der Ablauf als auch die Kriterien für eine Umschaltung werden im Folgenden beispielhaft erläutert.

Es wird dabei angenommen, dass ein Anwender mittels des Engineering-Systems 30 eine Vielzahl von Funktionsplänen (z.B. Continuous Function Chart (CFC)-Pläne), die jeweils eine Messstelle - z.B. ein Ventil, einen Motor oder einen Regler der prozesstechnischen Einrichtung - repräsentieren, erstellt hat. Aus diesen Funktionsplänen hat das Engineering-System 30 Funktionen erzeugt und diese über den Anlagenbus 7 an das Automatisierungssystem 10 übertragen, was bedeutet, dass diese Funktionen in das Automatisierungssystem 10 geladen wurden und dort nun im Rahmen der Steuerung des Prozesses 2 bzw. zur Lösung der Automatisierungsaufgabe verarbeitet werden können. Ein solches Verfahren ist beispielsweise aus dem Siemens Katalog SIMATIC PCS 7 Process Control System System components, Edition 2014/15, Seiten 4/7 und 4/8, bekannt.

FIG 2 zeigt hierzu für das Automatisierungssystem 10 beispielhaft einen CFC-Plan für eine Messstelle 50 mit einem Eingangsbereich 51 mit mehreren Eingängen 52 und jeweils einem zugeordneten Kanaltreiber 53 sowie mit einem Ausgangsbereich 54 mit einem Ausgang 55 und einem zugeordneten Kanaltreiber 56. Der CFC-Plan weist für die Messstelle 50 jeweils einen Funktionsbaustein 57, 58 für jedes der Prozessobjekte 2a, 2b, einen Instanzen-Datenbaustein 59, in dem nicht flüchtige bzw. für das Bedien- und Beobachtungssystem 3 relevante (HMI relevante) Prozesswerte festgehalten sind, sowie einen Sendefunktionsbaustein 60 im Rahmen der ereignisgesteuerten Übertragung von Prozesswerten auf.

Die Übertragung der Prozesswerte von dem Automatisierungssystem 10 an den Server 4 kann zum einen ereignisgesteuert erfolgen. Bei einer ereignisgesteuerten Übertragung entscheidet und sendet das Automatisierungssystem 10 selbst diejenigen Prozesswerte an den Server 4, die sich seit der letzten Übertragung entsprechend geändert (parametrierbar) haben. Die Prozesswerte werden hierzu durch das Automatisierungssystem 10 auf Änderungen überwacht. Hierzu weist jeder der Funktionsbausteine 57, 58 des CFC-Plans eine Evaluierungsfunktion 61 auf, die aufgerufen wird, um die zu überwachenden Prozesswerte auf Änderungen zu überprüfen. Die Funktion 61 ist eine Funktion innerhalb des Automatisierungssystems 10, die zwar das Datenaufkommen zwischen dem Automatisierungssystem 10 und dem Server 4 verringert, jedoch die Rechenlast in dem Automatisierungssystem 10 vergrößert. Liegt eine Änderung von Prozesswerten vor, wird diese in einem dedizierten Bereich des Instanz-Datenbausteins 59 markiert. Diese Markierung wird durch eine Sendefunktion 60 überwacht und im Falle einer Markierung der zugehörige Prozesswert zum Ende des CFC-Bearbeitungs-Zyklusses durch die Sendefunktion 60 an den Server 4 übertragen.

Alternativ kann die Übertragung der Prozesswerte von dem Automatisierungssystem 10 an den Server 4 zyklisch erfolgen. Dies erfolgt über ein Polling, bei dem die Prozesswerte direkt durch den Treiber 43 aus dem Instanz-Datenbaustein 59 gelesen werden.

Dem Automatisierungssystem 10 ist hierbei durch das Bedien- und Beobachtungssystem 3 über den Anschluss 8 bzw. den Anschluss 9 anzeigbar, welches der zwei vorbestimmten Verfahren zur Übertragung der Prozesswerte ausgewählt ist.

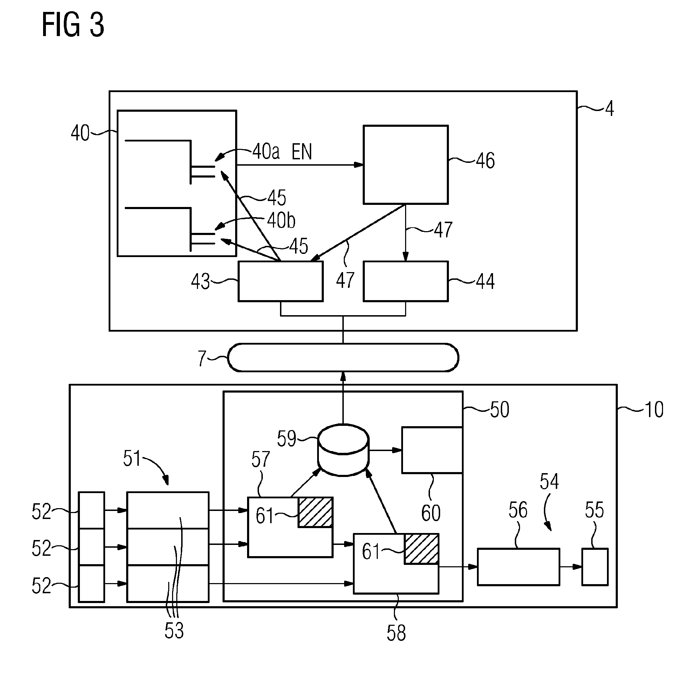

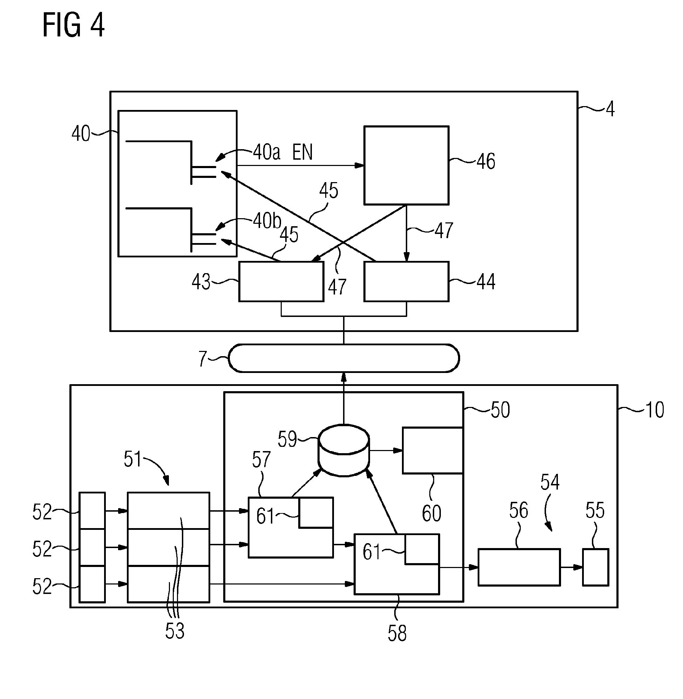

Anhand von FIG 3 und 4 sollen die Abläufe und die Vorzüge der hierdurch möglichen lastengesteuerten und dynamischen Übertragungsumschaltung für die Kommunikation zwischen dem Automatisierungssystem 10 und dem Bedien- und Beobachtungssystem 3 verdeutlicht werden.

Die FIG 3 zeigt dabei den Zustand unmittelbar nach bzw. beim Hochfahren des Leitsystems 1 von FIG 1 in dem Automatisierungssystem 10 und dem Server 4. Um möglichst schnell in dem Server 4 ein aktualisiertes Prozessabbild zu erhalten und um mit unverminderter Rechenleistung des Automatisierungssystems 10 die Automatisierung des Prozesses durchführen zu können, wird beim Hochfahren eine Übertragung der Prozesswerte rein durch das zyklische ("Polling") Übertragungsverfahren vorgenommen. Somit kann die Einrichtung, in der der Prozess 2 abläuft, frühzeitiger in einen bedien- und beobachtungsfähigen Zustand gelangen als bei einer ereignisgesteuerten Übertragung. Während des Hochfahrens sind die Evaluierungsfunktionen 61, 62 inaktiv (in FIG 3 schraffiert dargestellt) und verursachen somit keine Rechenlast. Infolge dessen wird wegen der fehlenden Markierung der Prozesswerte im Instanz-Datenbaustein 59 auch niemals die Sendefunktion 60 aktiv. In dem Server 4 wird das Prozessabbild einzig und allein durch den Treiber 43 für zyklische Übertragung ("Polling") aktualisiert, was durch die Pfeile 45 symbolisiert ist.

Die FIG 4 zeigt den Zustand während des normalen Betriebs des Leitsystems 1 (siehe Figur 1). Während des Betriebs des Prozesses 2 wurde durch den Rekonfigurationsbaustein 46 festgestellt, dass sich die für das Bedien- und Beobachtungssystem 3 relevanten Prozesswerte des ersten Prozessobjekts 2a deutlich langsamer ändern, als sie durch das Polling vom Treiber 43 abgerufen werden, d.h. die Änderungsrate ist unter einen vordefinierten Schwellwert gefallen. Durch den Rekonfigurationsbaustein 46 wurde daraufhin für das erste Prozessobjekt 2a eine Übertragungsumschaltung vorgenommen. Bei der Übertragungsumschaltung wurde der Treiber 44 für die ereignisgesteuerte Übertragung für die Aktualisierung der Prozessdaten 40a des ersten Prozessobjekts 2a im Prozessabbild des Servers 4 registriert und gleichzeitig der Treiber 43 für zyklische Übertragung (Polling) für die ersten Prozessdaten 40a abgemeldet. Dies wird dem Automatisierungssystem über den Anschluss 9, den Bus 7 und den Anschluss 8 angezeigt, woraufhin in dem Automatisierungssystem 10 im Funktionsbaustein 57 für das erste Prozessobjekt 2a die Evaluierungsfunktion 61 freigeschaltet wird. Die Anzeige des ausgewählten Übertragungsverfahrens und somit die Freischaltung der Evaluierungsfunktion 61 erfolgt über das Setzen eines Flags im Instanz-Datenbaustein 59 durch den Treiber 44 über den Busanschluss 9, den Bus 7 und den Busanschluss 8. Die sich langsam ändernden Prozesswerte des ersten Prozessobjekts 2a werden nun durch die Sendefunktion 60 ausschließlich bei einer Änderung in den Server 4 übertragen. Dadurch wird die Kommunikationslast deutlich reduziert. Da sich bei dem zweiten Prozessobjekt 2b die Prozesswerte weiterhin zu schnell ändern, um sie sinnvoll ereignisorientiert übertragen zu können, werden diese nach wie vor zyklisch bzw. durch Polling mittels des Treibers 43 übertragen. In dem Automatisierungssystem 10 wird somit für dieses zweite Prozessobjekt 2b die Rechenlast eingespart, die ansonsten für die Evaluierungsfunktion 61 des Funktionsbausteins 58 benötigt würde.

Eine "schnelle" Änderung eines Prozesswertes liegt vor, wenn sich dieser mindestens einmal innerhalb eines Pollingzyklusses ändert. Ein für eine Umschaltung zwischen den Treibern 43, 44 besonders geeigneter Schwellwert für die Aktualisierungsrate des Prozessabbildes ist somit der Pollingzyklus.

Durch die Anwendung dieser lastengesteuerten und dynamischen Übertragungsumschaltung kann sich das Leitsystem 1 im Kontext der effizientesten Übertragungsmethode spezifisch für jedes Prozessobjekt 2a, 2b anpassen. Ein optimales Gleichgewicht auf Seite des Automatisierungssystems 10 und des Bedien- und Beobachtungssystems 3 zwischen Rechen- und Kommunikationslast kann durch diese Vorgehensweise erreicht werden.

Tritt ein Störfall oder ein außergewöhnliches Ereignis ein, bei dem sich beispielsweise Prozesswerte, die bislang ereignisgesteuert übertragen worden sind, wieder schneller ändern, kann dies durch den Rekonfigurationsbaustein 46 erkannt werden und in Folge eine Umschaltung der Übertragung auf den Treiber 43 stattfinden. Dies kann dem Automatisierungssystem 10 durch Entfernen eines Flag im Instanz-Datenbaustein 59 durch den Treiber 43 über den Busanschluss 9, den Bus 7 und den Busanschluss 8 angezeigt werden, woraufhin das Automatisierungssystem 10 die Evaluierungsfunktion 61 wieder deaktiviert bzw. sperrt. Dadurch kann ähnlich wie beim Hochfahren der prozesstechnischen Einrichtung die Rechenlast für ereignisgesteuerte Übertragung aus dem Automatisierungssystem 10 genommen werden. Auch hier kann eine optimale und Prozessobjekt-spezifische Anpassung der Übertragungsverfahren durch das Leitsystem 1 selbst vorgenommen werden. Entscheidungsgrundlage für eine Treiberumschaltung durch den Rekonfigurationsbaustein 46 ist auch hier die Änderungsrate, wie sie durch die Ereignis-Nachrichten EN ableitbar ist.

Zusammenfassend ergibt sich hierdurch ein robusteres Leitsystem, dass sich dynamisch und spezifisch mit seinen Übertragungsverfahren zwischen dem Automatisierungssystem und dem Bedien- und Beobachtungssystem an den jeweiligen Zustand des Prozesses bzw. der Einrichtung, auf der der Prozess abläuft, anpassen kann. Automatisch stellt sich das optimale Gleichgewicht zwischen der Kommunikationslast zwischen dem Automatisierungssystem und Bedien- und Beobachtungssystem sowie der Rechenlast des Automatisierungssystems ein. Hierdurch kann die Verfügbarkeit, die Lebensdauer und der Energiebedarf des Leitsystems verbessert werden.

Neben den genannten zyklischen und ereignisgesteuerten Übertragungsverfahren können auch noch weitere Übertragungsverfahren wie, z.B. Token Passing, in dem Leitsystem zur Auswahl vorhanden sein.

In einer einfacheren Ausgestaltung erfolgt die Auswahl des Übertragungsverfahrens nicht anhand der Änderungsrate des Prozessabbildes, sondern in Abhängigkeit von einem Betriebszustand des Prozesses 2. Der Betriebszustand kann beispielsweise über einen Bedien- und Beobachtungsplatz 6 (siehe FIG 1) von einem Bedienpersonal des Prozesses 2 abgefragt und eine Eingabe oder Auswahl des Bedienpersonals erfasst werden. Das Leitsystem kann dann anhand des ermittelten Betriebszustandes das Übertragungsverfahren auswählen. Alternativ kann der Betriebszustand durch das Leitsystem 1 selbst, z.B. durch einen entsprechenden Funktionsbaustein in dem Bedien- und Beobachtungssystem 3, anhand von ausgewählten Variablen des Prozesses, z.B. Drücke, Temperaturen, Gewichte, etc. ermittelt werden. Es kann dann je nach Zustand des Prozesses flexibel von den Vorteilen des jeweiligen Verfahrens Gebrauch gemacht werden und es können somit die Vorteile mehrerer Übertragungsverfahren genutzt werden.

## Patentansprüche

1. Verfahren zum Betrieb eines Leitsystems (1) für einen technischen Prozess (2), wobei das Leitsystem (1) ein Bedien- und Beobachtungssystem (3) und zumindest ein Automatisierungssystem (10, 20) umfasst und wobei Prozesswerte von dem zumindest einen Automatisierungssystem (10, 20) an das Bedien- und Beobachtungssystem (3) übertragen werden, **dadurch gekennzeichnet, dass** die Übertragung der Prozesswerte wahlweise mit einem von zumindest zwei vorbestimmten Verfahren zur Bestimmung der Übertragungszeitpunkte von Prozesswerten vorgebbarer Prozessvariablen erfolgt.

2. Verfahren nach Anspruch 1, **dadurch gekennzeichnet, dass** die Wahl des vorbestimmten Verfahrens zur Bestimmung der Übertragungszeitpunkte in Abhängigkeit von einem Betriebszustand des Prozesses (2) erfolgt.

3. Verfahren nach Anspruch 1, **dadurch gekennzeichnet, dass** die Wahl des vorbestimmten Verfahrens zur Bestimmung der Übertragungszeitpunkte in Abhängigkeit von einer Aktualisierungsrate eines in dem Bedien- und Beobachtungssystem (3) gespeicherten Prozessabbildes erfolgt.

4. Verfahren nach Anspruch 3, **dadurch gekennzeichnet, dass** zwischen den vorbestimmten Verfahren zur Bestimmung der Übertragungszeitpunkte umgeschaltet wird, wenn die Aktualisierungsrate einen Schwellwert unter- oder überschreitet.

5. Verfahren nach einem der vorhergehenden Ansprüche, **dadurch gekennzeichnet, dass** bei einem ersten der zumindest zwei vorbestimmten Verfahrens zur Bestimmung der Übertragungszeitpunkte die Prozesswerte ereignisgesteuert übertragen werden.

6. Verfahren nach Anspruch 5, **dadurch gekennzeichnet, dass** das erste vorbestimmte Verfahren zur Bestimmung der Übertragungszeitpunkte bei einem Normalbetrieb des Prozesses (2) verwendet wird.

7. Verfahren nach Anspruch 5 oder 6, **dadurch gekennzeichnet, dass** bei einer Übertragung der Prozesswerte mit dem ersten vorbestimmten Verfahrens zur Bestimmung der Übertragungszeitpunkte die Prozesswerte in dem Automatisierungssystem (10, 20) auf Änderungen überwacht, nur geänderte Prozesswerte an das Bedien- und Beobachtungssystem (3) übertragen werden und in dem Bedien- und Beobachtungssystem (3) die empfangenen geänderten Prozesswerte zur Aktualisierung des Prozessabbildes verwendet werden.

8. Verfahren nach einem der vorhergehenden Ansprüche, **dadurch gekennzeichnet, dass** bei einem zweiten der zumindest zwei vorbestimmten Verfahren zur Bestimmung der Übertragungszeitpunkte die Prozesswerte zyklisch übertragen werden.

9. Verfahren nach Anspruch 8, **dadurch gekennzeichnet, dass** das zweite vorbestimmte Verfahrens zur Bestimmung der Übertragungszeitpunkte bei einem Hochfahren des Prozesses (2) durch das Leitsystem (1) und/oder einer Störung des Prozesses (2) verwendet wird.

10. Verfahren nach Anspruch 8 oder 9, **dadurch gekennzeichnet, dass** bei einer Übertragung der Prozesswerte mit dem zweiten vorbestimmten Verfahren zur Bestimmung der Übertragungszeitpunkte die empfangenen Prozesswerte in dem Bedien- und Beobachtungssystem (3) auf Änderungen überwacht werden und nur geänderte Prozesswerte zur Aktualisierung des Prozessabbildes verwendet werden.

11. Leitsystem (1) für einen technischen Prozess (2), umfassend ein Bedien- und Beobachtungssystem (3) und zumindest ein Automatisierungssystem (10, 20), wobei Prozesswerte von dem zumindest einen Automatisierungssystem (10, 20) an das Bedien- und Beobachtungssystem (3) übertragbar sind, **dadurch gekennzeichnet, dass** das Leitsystem (1) derart ausgebildet ist, dass die Übertragung der Prozesswerte wahlweise mit einem von zumindest zwei vorbestimmten Verfahren zur Bestimmung der Übertragungszeitpunkte von Prozesswerten vorgebbarer Prozessvariablen erfolgt.

12. Leitsystem (1) nach Anspruch 11, **gekennzeichnet durch** eine Einrichtung (6), die dazu ausgebildet ist, einen Betriebszustand des Prozesses (2) zu ermitteln und das vorbestimmte Verfahren zur Bestimmung der Übertragungszeitpunkte in Abhängigkeit von dem ermittelten Betriebszustand des Prozesses (2) auszuwählen.

13. Leitsystem (1) nach Anspruch 11, **dadurch gekennzeichnet, dass** in dem Bedien- und Beobachtungssystem (3) ein Prozessabbild des Prozesses (2) gespeichert ist und dass es eine Funktionskomponente (46) aufweist, die dazu ausgebildet ist, eine Aktualisierungsrate des Prozessabbildes zu ermitteln und das vorbestimmte Verfahren zur Bestimmung der Übertragungszeitpunkte in Abhängigkeit von der ermittelten Aktualisierungsrate auszuwählen.

14. Leitsystem (1) nach Anspruch 13, **dadurch gekennzeichnet, dass** in der Funktionskomponente (46) ein Schwellwert gespeichert ist und sie dazu ausgebildet ist, zwischen den vorbestimmten Verfahren zur Bestimmung der Übertragungszeitpunkte umzuschalten, wenn die Aktualisierungsrate den Schwellwert unter- oder überschreitet.

15. Automatisierungssystem (10, 20) zur Verwendung in einem Leitsystem (1) nach Anspruch 11, wobei das Automatisierungssystem (10, 20) einen Anschluss (8) aufweist, über welchen bei daran angeschlossenem Bedien- und Beobachtungssystem (3) die Prozesswerte an das Bedien- und Beobachtungssystem (3) übertragbar sind, **dadurch gekennzeichnet, dass** dem Automatisierungssystem (10, 20) durch das Bedien- und Beobachtungssystem (3) über den Anschluss (8) anzeigbar ist, welches der zumindest zwei vorbestimmten Verfahren zur Übertragung der Prozesswerte ausgewählt ist.

16. Bedien- und Beobachtungssystem (3) zur Verwendung in einem Leitsystem (1) nach Anspruch 11, wobei das Bedien- und Beobachtungssystem (3) einen Anschluss (9) aufweist, über welchen bei daran angeschlossenem Automatisierungssystem (10, 20) die Prozesswerte an das Bedien- und Beobachtungssystem (3) übertragbar sind, **dadurch gekennzeichnet, dass** über den Anschluss (9) dem Automatisierungssystem (10, 20) anzeigbar ist, welches der zumindest zwei vorbestimmten Verfahren zur Übertragung der Prozesswerte ausgewählt ist.
